# EUROPÄISCHE PATENTSCHRIFT

(11) **EP 2 894 973 B1**
(45) Veröffentlichungstag und Bekanntmachung des Hinweises auf die Patenterteilung: **03.06.2020**
(21) Anmeldenummer: 13765678.1
(22) Anmeldetag: 13.09.2013
(51) Int. Cl.: A01M 17/00

(54) **LOCKSYSTEME FÜR SCHÄDLINGE UND DEREN VERWENDUNG**
DEVICE FOR ATTRACTING INSECTS AND USE THEREOF
DISPOSITIF POUR ATTIRER DES INSECTES ET L'UTILISATION DUDIT DISPOSITIF

(30) Priorität: 14.09.2012 DE 102012108621
(43) Veröffentlichungstag der Anmeldung: 22.07.2015
(73) Patentinhaber: BIOCARE Gesellschaft für biologische Schutzmittel mbH, 37574 Einbeck (DE)
(72) Erfinder: PATEL, Anant, 33604 Bielefeld (DE)
(74) Vertreter: Kröncke, Rolf
(86) Internationale Anmeldenummer: PCT/EP2013/068984
(87) Internationale Veröffentlichungsnummer: WO 2014/041112

(56) Entgegenhaltungen:
- WO-A1-01/32013
- WO-A1-03/028453
- US-A- 4 880 624
- US-B1- 6 978 572

## Beschreibung

### Locksysteme für Schädlinge und deren Verwendung

Die vorliegende Anmeldung richtet sich auf ein System bzw. Vorrichtung zum Locken von Schädlingen. Dieses System umfasst CO₂-freisetzende Mikroorganismen sowie für diese Mikroorganismen spezifische Nährstoffe gemäß Anspruch 1, wobei dieses System bzw. die Vorrichtung ein oder mehrere biologisch abbaubare Biopolymere umfasst und ein Freisetzen von CO₂ und gegebenenfalls anderen Lockstoffen über einen Zeitraum von mehr als 20 Tagen erlaubt.

Weiterhin stellt die vorliegende Anmeldung die Verwendung eines solchen Systems bzw. einer solchen Vorrichtung zum Anlocken von Schädlingen insbesondere von Mais oder Kartoffelschädlingen, wie z.B. Larven des westlichen Maiswurzelbohrers oder Drahtwurmes bereit. Schließlich richtet sich die vorliegende Anmeldung auch auf Verfahren zum Anlocken von Schädlingen, wie im Boden lebende Schädlinge, insbesondere von Schädlingen von Mais oder Kartoffeln, wie den Larven des westlichen Maiswurzelbohrers, den Gefurchten Dickmaulrüßler oder für Drahtwürmer, wobei die erfindungsgemäßen Systeme oder Vorrichtungen in unmittelbarer Nachbarschaft zu den Pflanzen nicht aber bevorzugt direkt an den Pflanzen positioniert werden.

### Stand der Technik

Kohlenstoffdioxid (CO₂) ist als Lockstoff für verschiedene im Boden lebende Organismen bekannt. Eine Vielzahl von Schädlingsinsekten nutzen CO₂ und dessen Konzentration zur Lokalisierung der Wirte. Ein wichtiges Beispiel hierfür ist der westliche Maiswurzelbohrer (*Diabrotica virgifera virgifera*), deren Larven CO₂ zur Lokalisierung der Wurzeln von lebenden Maispflanzen verwendet, um diese dann als Nahrung zu nutzen, wenn sie sich in Richtung des aufsteigenden CO₂ Gradienten bewegen.

Die Zerstörung der Wurzeln und der damit einhergehende physiologische Stress der Pflanzen durch das Fressverhalten der Larven führt zu hohen Verlusten bei diesen Nutzpflanzen. Daher stellt der westliche Maiswurzelbohrer weltweit einen auch wirtschaftlich wichtigen Schädling dar. Es gibt Untersuchungen aus den frühen 2000ern, dass in den USA ein Verlust von bis zu 1 Mrd. USD aufgrund der Schädigung durch die Larve des westlichen Maiswurzelbohrers auftreten.

Neben verschiedenen üblichen chemischen oder biologischen Pestiziden wurde versucht, die Lokalisierung der Wirte durch diesen Schädling, die, wie gesagt, durch einen ansteigenden CO₂ Gradienten erfolgt, zu stören. So beschreibt z.B. Bernklau E.A. et al., Journal of Economic Entomology, 97(2), 330-339, 2004, Verfahren und Vorrichtungen zum Anlocken von Schädlingen. Dabei werden Körner aus Bäckerhefe und entsprechenden Nährstoffen hierfür, sowie mit organischem Substrat beschrieben, die dann als CO₂ Quelle dienen, um die Larven des westlichen Maiswurzelbohrers von den Wurzeln der Maispflanzen fernzuhalten.

Aus der WO 01/32013 sind Verfahren und Vorrichtungen zum Anlocken von im Boden lebenden Insekten bekannt. Die WO 03/028453 beschreibt biologisch abbaubare feste Zubereitung eines Pflanzenschutzmittels mit verzögerter Wirkstofffreisetzung. Ein Problem der im Stand der Technik beschriebenen Formulierungen ist aber, dass der CO₂ Gradient und damit die Wirksamkeit dieser Systeme nur für einen kurzen Zeitraum möglich ist, in den Experimenten zeigte sich hierfür ein Zeitraum von maximal 2 Wochen. Tatsächlich erfordert aber eine wirksame Bekämpfung der Larven des westlichen Maiswurzelbohrers aber auch anderer Schädlinge, wie z.B. Drahtwürmern bei Kartoffeln, einen Gradienten über einen längeren Zeitraum, um die Schädlinge wirksam zu bekämpfen.

Ziel der vorliegenden Anmeldung ist die Bereitstellung solcher Systeme und deren Verwendung in der Schädlingsbekämpfung sowie entsprechende Verfahren. Die erfindungsgemäßen Systeme und Vorrichtungen erlauben insbesondere eine Bekämpfung von Bodenschädlingen, insbesondere Mais und Kartoffelschädlingen, wie den Larven des westlichen Maiswurzelbohrers oder den Drahtwürmern, die Larven von Käfern aus der Familie der Schnellkäfer. Diese Larven sind als Schädlinge in der Forst- und Landwirtschaft sowie im Gartenbau bekannt und führen sowohl im Laub und Nadelholzbereich aber auch insbesondere im Kartoffelbereich zu erheblichen Schäden.

### Beschreibung der Erfindung

Erfindungsgemäß wird ein System bzw. eine Vorrichtung zum Locken von Schädlingen gemäß Anspruch 1 bereitgestellt. Dieses System oder Vorrichtung umfasst dabei CO₂ freisetzende Mikroorganismen und für diese Mikroorganismen spezifische Nährstoffe. Das System bzw. die Vorrichtung zeichnet sich dadurch aus, dass es ein oder mehrere biologisch abbaubare Biopolymere umfasst, das die weiteren Bestandteile des Systems vollständig umschließt, z.B. in Form einer Kapsel, und ein Freisetzen von CO₂ und gegebenenfalls anderen durch die Mikroorganismen freigesetzten oder zusätzlich in dem System vorhandenen Lockstoffen über einen Zeitraum von mehr als 20 Tagen erlaubt.

Es ist bevorzugt, dass die Freisetzung des CO₂ über einen Zeitraum von mehr als 25 Tagen, wie über 28 Tagen und länger, z.B. über 35 Tagen und mehr erfolgt.

Vorliegend werden die Ausdrücke "System" und "Vorrichtung" synonym eingesetzt, soweit nicht anders ausgeführt.

Unter dem Ausdruck "über einen Zeitraum von mehr als 20 Tagen" wird vorliegend verstanden, dass die CO₂ freisetzenden Mikroorganismen im System über einen Zeitraum von mehr als 20 Tagen CO₂ aktiv freisetzen. Insbesondere ist darunter zu verstehen, dass die CO₂ Konzentration in unmittelbarer Umgebung des Systems oberhalb (über) der CO₂ Konzentration in einem von dem System entfernter liegenden Bereich liegt, so dass ein CO₂ Gradient in Richtung des Systems ausgebildet wird. Dies gilt insbesondere im Erdreich.

Bei dem System bzw. der Vorrichtung handelt es sich um Partikel einschließlich Kapseln, Pellets oder Granulate, wie Kapseln, wobei zumindest die Kapselhülle bzw. Kapselmatrix durch ein oder mehrere Biopolymere ausgebildet ist. Hierbei kann es sich um solche handeln, die Biopolymere vollständig enthalten, z.B. in Form von Pellets. Die Pellets oder Kapseln können dabei in einer Ausführungsform im Wesentlichen von dem Biopolymer vollständig umschlossen sein. Alternativ kann es sich um Granulate handeln, wobei bei diesen Granulaten die ein oder mehreren Biopolymere die weiteren Bestandteile ebenfalls vollständig umschließen oder als vernetzende bzw. stabilisierende Matrix dienen. Weiterhin sind Ausführungsformen des erfindungsgemäßen Systems möglich, bei denen die Biopolymere die Partikel, wie Kapseln, Pellets oder Granulate aus den weiteren Bestandteilen durchziehen und somit die notwendige Stabilität des Systems liefern.

Bei den in dem System vorliegenden CO₂ freisetzenden Mikroorganismen handelt es sich insbesondere um Pilze oder Bakterien. Bevorzugt sind die Mikroorganismen Hefen einschließlich kommerziell erhältlichen Hefen, wie Bäckerhefe, aber auch Resthefe aus der Bier-, Wein- und Bioethanol-Produktion. Es können ein oder mehrere verschiedene Mikroorganismen vorliegen, die Hilfsfunktionen aufweisen.

In einer Ausführungsform kann ein mindestens zweiter Mikroorganismus, Hilfsorganismus, einer mit insektizider oder nematizider Wirkung sein. Dem Fachmann sind geeignete Mikroorganismen bekannt. Bevorzugt handelt es sich bei diesem mindestens zweiten Mikroorganismus um entomopathogene Mikroorganismen, wie entomopathogene Pilze oder entomopathogene Nematoden. Unter "entomopathogen" wird vorliegend verstanden, dass der Organismus die Fähigkeit besitzt, Insekten zu befallen, zu töten, zu immobilisieren oder anderweitig unschädlich zu machen.

Ein daraus bevorzugtes Beispiel für einen solchen zweiten Mikroorganismus stellt der Pilz *Beauveria bassiana.* Dieser Pilz ist bekannt als ein im Boden lebender Pilz, der parasitär auf verschiedener arthropode Spezien wirkt und ist als biologisches Insektizid bekannt. Eine gleichsam bekannte Alternative hierzu ist ein Pilz aus der Gattung der Metarhizien, wie *M. anisopliae.*

Der mindestens zweite Mikroorganismus als Hilfsorganismus ist einer, der die in dem System vorliegenden Nährstoffe in einer Weise umsetzen kann, dass diese für die CO₂ Produktion verantwortlichen Mikroorganismen besser verstoffwechselt werden können. Zum Beispiel erlaubt der Pilz *Beauveria bassiana* oder *M. anisopliae* einen Abbau von Stärke, die als spezifischen Nährstoff für den Mikroorganismus in dem System vorliegt. *Beauveria bassiana* oder *M*. *anisopliae* kann somit zwei Funktionen in diesem System ausfüllen, einerseits die insektizide bzw. nematizide Wirkung als entomopathogener Pilz und andererseits die Umsetzung von Nährstoffen, um diese für die CO₂ Freisetzung verantwortlichen Mikroorganismen besser verstoffwechselbar zu machen, z.B. aufgrund seiner Amylase-Aktivität.

Bei den für diese Mikroorganismen spezifischen Nährstoffen handelt es sich z.B. um solche ausgewählt aus Maismehl, Maisprotein und/oder anderen Maisbestandteilen, Stärke oder Stärke enthaltenden Bestandteile, Kürbismehl, Kartoffelmehl oder anderen Polysaccharid-enthaltende Nährstoffen, die z.B. für Hefen als Nährstoffe geeignet sind.

Dem Fachmann sind geeignete Nährstoffe für die in dem System vorliegenden Mikroorganismen bekannt.

Wie oben bereits erwähnt, ist in einer weiteren Ausführungsform das System eines, das weiterhin ein Pestizid, insbesondere ein Insektizid oder Nematizid aufweist. Bei diesen kann es sich in einer Ausführungsform um solche aus der Gruppe der chemischen Insektizide, wie Tefluthrin, solche aus Pflanzenextrakten, wie Neemöl oder Azadirachtin, Quassiaextrakt oder ähnliche aber auch biologische Pflanzenschutzmittel, wie die bereits genannten entomopathogenen Pilze oder entomopathogene Nematoden handeln.

Es zeigte sich, dass Systeme, insbesondere Kapseln wie Pellets, die Hefe, Maismehl oder andere Stärkequellen und *Beauveria bassiana* oder *M. anisopliae* enthalten, die gewünschten Eigenschaften der Ausbildung einer entsprechenden CO₂ Konzentration, die zum Anlocken von Schädlingen, wie den westlichen Maiswurzelbohrer oder Drahtwürmern, über einen Zeitraum von mehr als 20 Tagen erlaubt.

Das System kann weiterhin weitere Bestandteile aufweisen, wie Füllstoffe, Trocknungshilfsmittel, Glukose, Saccharose, weitere Lockstoffe wie Cucurbitazin oder andere bekannte chemische Lockstoffe für den Schädling, aber auch Cellulose, Lignin und/oder Quellungshilfen. Dem Fachmann sind geeignete weitere Bestandteile bekannt, wobei diese nicht derart mit dem System vorliegenden Mikroorganismen interagieren, dass diese in dem System vorliegenden Mikroorganismen getötet oder anderweitig in ihrer Funktion beschränkt werden.

Wie ausgeführt, zeichnen sich die erfindungsgemäßen Systeme dadurch aus, dass sie ein oder mehrere biologisch abbaubare Biopolymere aufweisen. Diese Biopolymere liegen dabei z.B. derart vor, dass sie die weiteren Bestandteile des Systems im Wesentlichen, bevorzugt vollständig umschließen. In der Ausführungsform von Kapseln bilden die biologisch abbaubaren Biopolymere entsprechend die Kapselhülle aus. Dabei sind sie derart ausgebildet, dass ein Austausch von Nährstoffen und insbesondere ein Austreten von CO₂ möglich ist.

In einer alternativen Ausführungsform eines erfindungsgemäßen Systems bilden die Biopolymere die Matrix aus. Dabei sind diese so ausgebildet, dass die Biopolymere die weiteren Bestandteile vollständig umschließen.

Bei dem biologisch abbaubaren Biopolymeren handelt es sich insbesondere um solche aus Alginat, Carrageenan, Cellulose, Hemicellulose, Stärke, Chitin, Chitosan, Pektinat, Guar Gum, Acacia Gum, poly-D,L-Milchsäure, Gelatine, poly-Aminosäuren, Lignin und Derivaten sowie Mischungen davon. Dem Fachmann sind entsprechend geeignete Biopolymere bekannt. Es kann z.B. Alginat oder eine Alginat-Gelatine-Mischung eingesetzt werden.

Die Biopolymere, die insbesondere biologisch abbaubar sind, sind solche, die bevorzugt nach der Vegetationsperiode bzw. vor der nächsten Vegetationsperiode im Boden weitestgehend abgebaut sind.

Des Weiteren richtet sich die vorliegende Anmeldung auf die Verwendung eines erfindungsgemäßen Systems bzw. erfindungsgemäßen Vorrichtung zum Anlocken von Schädlingen, insbesondere von Maisschädlingen oder Kartoffelschädlingen bzw. allgemein von Schädlingen die Pflanzenbestandteile, wie die Knollen tragenden Stolone der Kartoffel und die Knollen selbst.

Besonders bevorzugt wird das erfindungsgemäße System bzw. die erfindungsgemäße Vorrichtung eingesetzt, um Maisschädlinge oder Kartoffelschädlinge zu bekämpfen, hier insbesondere den westlichen Maiswurzelbohrer als bekannten Maisschädling oder den Drahtwurm als bekannten Kartoffelschädling. Zudem wird es gegen den Gefurchten Dickmaulrüßler (z.B. an Erdbeeren) eingesetzt. Bevorzugt ist das System dabei eines, das weiterhin Insektizide oder Nematizide aufweist, wie z.B. *Beauveria bassiana,* um nach Anlocken der Schädlinge diese zu töten. Dieser Ansatz ist in der Fachwelt allgemein als "attract and kill"-Ansatz (alternativ: "lure-and kill") bekannt. Die erfindungsgemäßen Systeme und Vorrichtungen können alternativ pflanzliche oder chemische Wirkstoffe zum Abtöten der Schädlinge aufweisen.

Die Erfindung stellt darüber hinaus entsprechende Verfahren zum Anlocken und gegebenenfalls Bekämpfen von Schädlingen bereit. Dieses Verfahren ist insbesondere zur Bekämpfung von Schädlingen von Mais oder Kartoffeln und hier insbesondere von solchen, die den Wurzelbereich bzw. die in der Erde befindlichen Bereich angreifen. Das Verfahren ist insbesondere geeignet Larven des westlichen Maiswurzelbohrers, des Gefurchten Dickmaulrüßlers oder Drahtwürmer anzulocken und zu bekämpfen. Das erfindungsgemäße Verfahren ist dabei eines, dass die erfindungsgemäßen Systeme und Vorrichtungen nutzt, um die Schädlinge anzulocken. Dabei werden die Systeme und Vorrichtungen, z.B. in Form von Kapseln, in unmittelbarer Nachbarschaft zu den Pflanzen, wie dem Mais oder der Kartoffel, im Erdreich positioniert. Es ist dabei bevorzugt, dass die Positionierung nicht direkt an der Pflanze erfolgt, sondern in einem vorbestimmten Abstand in der Nähe der Pflanze. Der Fachmann kann einfach den geeigneten Abstand bestimmen. Dadurch wird erreicht, dass die Schädlinge von der Pflanze weggelockt werden. Es ist z.B. möglich, dass die erfindungsgemäßen Systeme, z.B. in Form von Kapseln oder Granulaten, zwischen den gelegten Samen bzw. Setzlingen eingebracht werden. Die Systeme können dabei gleichzeitig mit dem Einbringen der entsprechenden Pflanze Samen oder Pflanzensetzlinge erfolgen. Alternativ oder zusätzlich können die Systeme in einen zeitlich darauf folgenden Zeitraum mit geeigneten Maßnahmen eingebracht werden.

Das erfindungsgemäße Verfahren ist insbesondere eines, das sich dadurch auszeichnet, dass ein ansteigender CO₂ Gradient von der Pflanze in Richtung des Systems im Erdreich aufgebaut wird. Dadurch ist es möglich, die entsprechenden Schädlinge über den Gradienten in Richtung des Systems zu locken und hier gegebenenfalls zu töten oder anderweitig zu immobilisieren. Das Verfahren eignet sich somit die Schädlinge über einen langen Zeitraum anzulocken und zu töten. Erfindungsgemäß ist dieser Zeitraum in dem die Schädlinge angelockt werden mindestens 20 Tage, bevorzugt mindestens 25 Tage, wie mindestens 30 Tage.

Besonders geeignete Ausführungsformen sind solche, bei denen es sich um Kapseln oder Pellets, handelt umfassend ein Biopolymer oder eine Biopolymermischung, mindestens einen CO₂-freisetzenden Mikroorganismus, wie Hefe, Nährstoffe, wie stärkehaltige Nährstoffe, Hilfsmikroorgansimen, wie *B*. *bassiana* und/oder *M. anisopliae* und gegebenenfalls weiteren Killkomponenten wie Neem oder Quassin.

Eine Formulierung des Systems umfasst Biopolymer, Hefe, Maismehl oder anderes Mehl, *B. bassiana.* Eine andere Formulierung des Systems umfasst Biopolymer, Hefe, Maismehl oder anderes Mehl und *M. anisopliae.*

Weitere Formulierungen für das erfindungsgemäße System sind die oben genannten, die weiterhin Neem oder Quassin enthalten.

Die erfindungsgemäßen Systeme und Vorrichtungen können weitere Lockstoffe aufweisen, die neben oder zusätzlich zum CO₂ die Schädlinge anlocken. Insbesondere sind diese Lockstoffe solche, die auf geringerer Entfernung die Schädlinge in Richtung des Systems locken, damit sie dort gegebenenfalls getötet werden können.

Im Folgenden werden das erfindungsgemäße System und die erfindungsgemäße Verwendung näher beschrieben, ohne auf diese begrenzt zu sein.

### Beispiele:

### Beispiel 1

### Formulierung des erfindungsgemäßen Systems

S. cervisiae wird in vorbestimmter Menge entweder als angezogener Stamm oder als kommerziell erhältlicher Bäckerhefemix gegebenenfalls mit den weiteren Bestandteilen, wie Maismehl und *Beauveria bassiana* in 2%igem Natriumalginat suspendiert und mit Hilfe einer herkömmlichen Verkapselungsvorrichtung in eine 2%ige CaCl₂ Lösung eingetropft und 20 min nachvernetzt. Die Kapseln wurden mit einem Durchmesser von durchschnittlich 2,7 mm hergestellt.

### Beispiel 2

### Bestimmung der CO₂ Gradienten und der Dauer der Freisetzung

Die Kapseln wurden entweder in einer Menge von 1g oder 10g in einem Topf in die Erde gegeben. Die Messung an CO₂ Freisetzungsraten und der CO₂ Konzentration im Boden erfolgte mit üblichen CO₂ Meßgeräten. Die CO₂ Freisetzungsraten wurde zu den angegebenen Zeiten bestimmt. Es wurden Alginatkapseln ohne Zusatz (wirkstofffreie Alginatkapseln), Alginatkapseln mit einem Anteil von 16,7% Bäckerhefemix sowie Alginatkapseln mit 16,7% Bäckerhefemix, Stärke und als Hilfsmikroorganismus, die eine Amylase-Aktivität aufweist, Amylasequelle, vorliegend *Beauveria bassiana.*

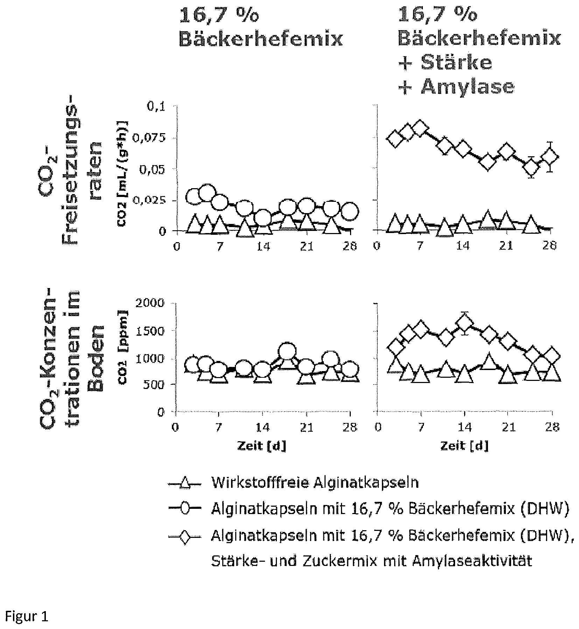

In der Figur 1 ist die CO₂ Freisetzungsrate und die CO₂ Konzentration im Boden mit den verschiedenen Kapseln dargestellt. Deutlich sind die erhöhte Freisetzung und die erhöhte Konzentration auch noch nach über 20 Tagen erkennbar. In der Figur 1 wurde kommerzielle Bäckerhefe verwendet versetzt mit einem Stärke und Zuckermix mit Amylaseaktivität.

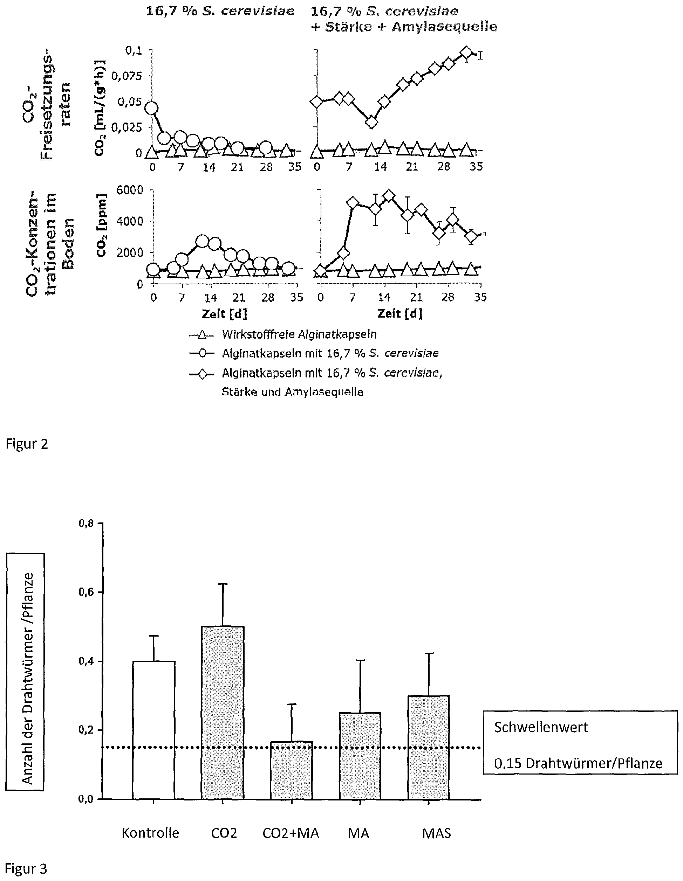

In der Figur 2 wurden die gleichen Messungen mit reinen *S*. *cerevisiae* und Maismehl sowie *Beauveria bassiana* durchgeführt. Die entsprechend verwendeten Kapseln sind dargestellt. Es sind besonders hohe Freisetzungsraten und CO₂ Konzentrationen im Boden bei der Kombination von Hefe mit Stärke als Nährstoff sowie *B. bassiana* als Amylasequelle zu beobachten.

Damit ist es erfindungsgemäß möglich, Systeme und Vorrichtungen, z.B. in Form von Kapseln, bereitzustellen, die im Boden CO₂ freisetzen und dadurch einen Gradienten aufbauen, um Schädlinge anzulocken und gegebenenfalls zu immobilisieren und/oder zu töten. Die Freisetzung erfolgt dabei über einen Zeitraum von mehr als 20 Tagen, wie zum Beispiel über 30 Tagen. Einem Zeitraum ausreichend, um die Schädlinge von den Pflanzen fernzuhalten.

### Beispiel 3:

### Verwendung von M. anisopliae

Wie in Beispiel 1 ausgeführt werden erfindungsgemäße Kapseln hergestellt. Dabei wurde *B. bassiana* durch M. anisopliae ersetzt. Die Bestimmung des CO₂ Gradienten und die Dauer der Freisetzung von CO₂ erfolgte wie in Beispiel 2.

Es zeigte sich, dass der CO₂ Gradient über einen Zeitraum von über 35 Tagen aufrecht erhalten werden konnte. Weiterhin zeigte sich, dass die Larven des Maiswurzelbohrers vermehrt bei den Kapseln zu finden waren und in geringerer Anzahl bei den Pflanzen.

Weiterhin zeigte sich, dass bei Untersuchungen mit Drahtwürmern eine Reduktion der Drahtwurmdichte erreicht werden konnte. Dieses wird aus der Figur 3 deutlich. CO₂ bezeichnet Kapseln mit Hefe, CO₂ + MA bezeichnet Kapseln mit Hefe und *M. aisopliae,* MA ist *M. anisopliae* alleine und MAS bezeichnet Sporen des MA Stammes. ART2825 ist dabei der eingesetzte *M. anisopliae* Stamm.

### Beispiel 4:

### Formulierung des erfindungsgemäßen Systems mit Pestiziden auf Pflanzenbasis

Wie in Beispiel 1 beschrieben werden Kapseln hergestellt, wobei anstelle von *B. bassiana* entweder Neem Azal oder ein Quassin-Extrakt (Trifolio-M, Deutschland) in Mengen von 1-10% w/w bei Neem Azal und 1-5% w/w für das Quassin-Extrakt zugegeben wurden.

Es zeigte sich, dass die zugefügten Pestizide keinen negativen Einfluss auf die Hefe aufzeigen und die Hefe über einen längeren Zeitraum lebensfähig blieb. Der Aufbau des CO₂-Gradienten ist vergleichbar mit den vorbeschriebenen Kapseln.

## Patentansprüche

1. System oder Vorrichtung zum Locken von Schädlingen umfassend i) CO₂-freisetzende Mikroorganismen, ii) für diese Mikroorganismen spezifische Nährstoffe und iii) Hilfsorganismen, die die Nährstoffversorgung der CO₂-freisetzenden Mikroorganismen unterstützen, iv) ein biologisch abbaubares Biopolymer, das die weiteren Bestandteile des Systems vollständig umschließt zur Freisetzung von CO₂ über einen Zeitraum von mehr als 20 Tagen.

2. System oder Vorrichtung nach Anspruch 1, wobei die CO₂-freisetzenden Mikroorganismen ausgewählt sind aus Pilzen oder Bakterien, wie Bäckerhefe.

3. System oder Vorrichtung nach Anspruch 1 oder 2, wobei die Nährstoffe ausgewählt sind aus Maismehl, Maisprotein und anderen Maisbestandteilen, Stärke, Kürbismehl, Kartoffelmehl.

4. System oder Vorrichtung nach einem der vorherigen Ansprüche, weiterhin enthaltend ein Pestizid, insbesondere ein Insektizid oder ein Nematizid.

5. System oder Vorrichtung nach Anspruch 4, wobei das Insektizid oder Nematizid mindestens eines ist ausgewählt aus der Gruppe der chemischen Insektizide, Pflanzenextrakte und biologischen Pflanzenschutzmittel.

6. System oder Vorrichtung nach Anspruch 4 oder 5, wobei das chemische Insektizid ausgewählt ist aus Tefluthrin und/oder das Pflanzenextrakt ausgewählt ist aus Neemöl oder Azadirachtin, Quassiaextrakt und/oder das biologische Pflanzenschutzmittel ausgewählt ist aus entomopathogenen Pilzen und entomopathogenen Nematoden.

7. System nach einem der vorherigen Ansprüche, wobei dieses weiterhin als Bestandteil Füllstoffe, Trocknungshilfsmittel, Glukose, Saccharose, weitere Lockstoffe wie Cucurbitacin, Cellulose, Lignin, und/oder Quellungshilfen enthält.

8. System oder Vorrichtung nach einem der vorherigen Ansprüche, wobei die biologisch abbaubaren Biopolymere ausgewählt sind aus Alginat, Carrageenan, Cellulose, Hemicellulose, Stärke, Chitin, Chitosan, Pektinat, Guar Gum, Acacia Gum, poly-D,L-Milchsäure, Gelatine, poly-Aminosäuren, Lignin und Derivaten sowie Mischungen davon.

9. System oder Vorrichtung nach einem der vorherigen Ansprüche, **dadurch gekennzeichnet, dass** dieses in Form von Kapseln oder als Granulat bereitgestellt vorliegt.

10. System oder Vorrichtung nach Anspruch 1, wobei diese Hilfsorganismen Pilze, insbesondere *B. bassiana* oder *M. anisopliae* sind.

11. Verwendung eines Systems nach einem der Ansprüche 1 bis 10 zum Anlocken von Schädlingen, insbesondere von Maisschädlingen oder Kartoffelschädlingen, insbesondere zum Anlocken der Larven des westlichen Maiswurzelbohrers, des Drahtwurms oder des Gefurchten Dickmaulrüßlers.

12. Verfahren zum Anlocken von Schädlingen, insbesondere von Schädlingen von Mais oder Kartoffeln, bevorzugt für Larven des westlichen Maiswurzelbohrers oder Drahtwürmer oder des Gefurchten Dickmaulrüßlers, umfassend die Bereitstellung eines Systems nach einem der Ansprüche 1 bis 10 und Positionieren dieses Systems in unmittelbarer Nachbarschaft zu den Pflanzen, insbesondere dem Mais oder Kartoffel.

13. Verfahren nach Anspruch 12, **dadurch gekennzeichnet, dass** ein aufsteigender CO₂-Gradient von der Pflanze in Richtung des Systems im Erdreich aufgebaut wird.

14. Verfahren nach Anspruch 12 oder 13, **dadurch gekennzeichnet, dass** dieses ein Immobilisieren, insbesondere Töten, der Larven des westlichen Maiswurzelbohrers oder des Drahtwurms oder des Gefurchten Dickmaulrüßlers umfasst.

## Claims

1. A system or device for attracting pests, comprising i) CO₂-releasing microorganisms, ii) nutrients specific for these microorganisms, iii) auxiliary organisms which support the supply of nutrients to the CO₂-releasingmicro-organisms, iv) a biodegradable biopolymer which fully surrounds the other constituents of the system and allows release of CO₂ over a period of more than 20 days.

2. The system or device of claim 1, the CO₂-releasing microorganisms being selected from fungi or bacteria, such as baker's yeast.

3. The system or device of claim 1 or 2, the nutrients being selected from corn flour, corn protein, and other corn constituents, starch, squash flour, potato flour.

4. The system or device of any of the preceding claims, further comprising a pesticide, more particularly an insecticide or a nematicide.

5. The system or device of claim 4, the insecticide or nematicide being at least one selected from the group of chemical insecticides, plant extracts, and biological plant protection agents.

6. The system or device of claim 4 or 5, the chemical insecticide being selected from tefluthrin and/or the plant extract being selected from neem oil or azadirachtin, quassia extract and/or the biological plant protection agent being selected from entomopathogenic fungi and entomopathogenic nematodes.

7. The system of any of the preceding claims, further comprising as constituent fillers, drying assistants, glucose, sucrose, further attractants such as cucurbitacin, cellulose, lignin, and/or swelling aids.

8. The system or device of any of the preceding claims, the biodegradable biopolymers being selected from alginate, carrageenan, cellulose, hemicellulose, starch, chitin, chitosan, pectinate, guar gum, acacia gum, poly-D,L-lactic acid, gelatin, poly-amino acids, lignin, and derivatives, and also mixtures thereof.

9. The system or device of any of the preceding claims, **characterized in that** it is provided in the form of capsules or granules.

10. The system or device of claim 9, these auxiliary organisms being fungi, more particularly *B. bassiana* or *M. anisopliae.*

11. The use of a system of any of claims 1 to 10 for attracting pests, more particularly corn pests or potato pests, more particularly for attracting the larvae of the Western corn rootworm, of the wireworm, or of the black vine weevil.

12. A method for attracting pests, more particularly pests of corn or potatoes, preferably for larvae of the Western corn rootworm or wireworms or of the black vine weevil, comprising the provision of a system of any of claims 1 to 10 and positioning of said system in the immediate vicinity of the plants, more particularly of the corn or potato.

13. The method of claim 12, **characterized in that** an ascending CO₂ gradient from the plant in the direction of the system is built up in the soil.

14. The method of claim 12 or 13, **characterized in that** it permits immobilization, more particularly killing, of the larvae of the Western corn rootworm or of the wireworm or of the black vine weevil.

## Revendications

1. Système ou dispositif pour attirer des nuisibles comprenant i) des micro-organismes libérant du CO₂, ii) des substances nutritives spécifiques pour ces micro-organismes et iii) des organismes auxiliaires, qui soutiennent l'approvisionnement en substances nutritives des micro-organismes libérant du CO₂, iv) un biopolymère biodégradable, qui entoure complètement les autres composants du système pour la libération de CO₂ sur une période de temps de plus de 20 jours.

2. Système ou dispositif selon la revendication 1, les micro-organismes libérant du CO₂ étant choisis parmi des champignons et des bactéries, comme la levure de boulanger.

3. Système ou dispositif selon la revendication 1 ou 2, les substances nutritives étant choisies parmi la farine de maïs, les protéines de maïs et d'autres composants du maïs, l'amidon, la farine de courge, la farine de pomme de terre.

4. Système ou dispositif selon l'une quelconque des revendications précédentes, contenant en outre un pesticide, en particulier un insecticide ou un nématicide.

5. Système ou dispositif selon la revendication 4, l'insecticide ou le nématicide étant au moins l'un choisi dans le groupe des insecticides chimiques, des extraits végétaux et des produits phytosanitaires biologiques.

6. Système ou dispositif selon la revendication 4 ou 5, l'insecticide chimique étant choisi parmi la téfluthrine et/ou l'extrait végétal étant choisi parmi l'huile de neem ou l'azadirachtine, un extrait de cassia et/ou le produit phytosanitaire biologique étant choisi parmi des champignons entomopathogènes et des nématodes entomopathogènes.

7. Système selon l'une quelconque des revendications précédentes, celui-ci contenant en outre en tant que composant des charges, des auxiliaires de séchage, du glucose, du saccharose, d'autres agents attractifs comme la cucurbitacine, de la cellulose, de la lignine, et/ou des auxiliaires de gonflement.

8. Système ou dispositif selon l'une quelconque des revendications précédentes, les biopolymères biodégradables étant choisis parmi un alginate, un carraghénane, une cellulose, une hémicellulose, un amidon, de la chitine, du chitosane, un pectinate, une gomme de guar, une gomme d'acacia, un poly(acide D,L-lactique), une gélatine, des poly(acides aminés), une lignine et des dérivés ainsi que des mélanges correspondants.

9. Système ou dispositif selon l'une quelconque des revendications précédentes, **caractérisé en ce que** celui-ci est présent de manière préparée sous forme de capsules ou en tant que granules.

10. Système ou dispositif selon la revendication 1, ces organismes auxiliaires étant des champignons, en particulier *B. bassiana* ou *M. anisopliae.*

11. Utilisation d'un système selon l'une quelconque des revendications 1 à 10 pour attirer des nuisibles, en particulier des nuisibles du maïs ou des nuisibles de pomme de terre, en particulier pour attirer les larves de la chrysomèle des racines du maïs, du ver fil-de-fer ou de l'otiorhynque sillonné.

12. Procédé pour attirer des nuisibles, en particulier des nuisibles du maïs ou de pomme de terre, préférablement des larves de la chrysomèle des racines du maïs, du ver fil-de-fer ou de l'otiorhynque sillonné, comprenant la mise à disposition d'un système selon l'une quelconque des revendications 1 à 10 et le positionnement de ce système à proximité immédiate des végétaux, en particulier du maïs ou des pommes de terre.

13. Procédé selon la revendication 12, **caractérisé en ce qu'**un gradient ascendant de CO₂ est établi dans le sol, du végétal en direction du système.

14. Procédé selon la revendication 12 ou 13, **caractérisé en ce que** celui-ci comprend une immobilisation, en particulier la destruction, des larves de la chrysomèle des racines du maïs, du ver fil-de-fer ou de l'otiorhynque sillonné.
